# EUROPEAN PATENT APPLICATION

(11) **EP 4 275 511 A1**
(43) Date of publication of application: **15.11.2023**
(21) Application number: 22736760.4
(22) Date of filing: 06.01.2022
(51) Int. Cl.: A23L 2/00, A23L 2/52, A23L 2/56

(54) **BEVERAGE CONTAINING GALACTO-OLIGOSACCHARIDE**

(30) Priority: 08.01.2021 JP 2021002193
(71) Applicant: Suntory Holdings Limited, Osaka 530-8203 (JP)
(72) Inventor: AOKI, Koji, Kawasaki-shi, Kanagawa 211-0067 (JP); YASUI, Yohei, Kawasaki-shi, Kanagawa 211-0067 (JP)
(74) Representative: Vossius & Partner Patentanwälte Rechtsanwälte mbB
(86) International application number: PCT/JP2022/000189
(87) International publication number: WO 2022/149592

(57) **Abstract**

An object of the present invention is to improve an unpleasant finish caused by vanillin in a beverage comprising vanillin and having a degree of sweetness of not more than 9.

A galactooligosaccharide is added to a beverage comprising not less than 5 ppb of vanillin and having a degree of sweetness of not more than 9, to adjust the galactooligosaccharide content in the beverage to not less than 1500 ppm.

## Description

### TECHNICAL FIELD

The present invention relates to a beverage comprising a galactooligosaccharide. More particularly, this invention relates to a beverage comprising vanillin and a galactooligosaccharide, and characterized in that an unpleasant finish caused by vanillin is improved.

### BACKGROUND ART

In recent years, consumers' health awareness is increasing, and the style of drinking a beverage little by little over time (also called "sipping") is becoming increasingly widespread. Under these backgrounds, flavored water beverages are becoming more popular. Flavored water generally refers to a beverage with a low degree of sweetness which is prepared by adding a flavoring and/or other ingredients to water (spring water, mineral water, natural mineral water, natural water, etc.). In the market of flavored water beverages, fruit-flavored water beverages account for a majority of the share, while lactic-flavored water beverages are also gaining popularity. It is known that in many lactic-flavored water beverages, vanillin derived from a flavoring plays a fundamental role in the formation of aroma (PTL 1).

Meanwhile, galactooligosaccharides are known to have an effect to increase intestinal beneficial bacteria such as bifidobacteria, and are used in a wide variety of health foods. However, the effect of galactooligosaccharides to improve the aroma of beverages is almost unknown.

### CITATION LIST

### PATENT LITERATURE

PTL 1: Japanese Unexamined Patent Application Publication No. JP 2016-127818

### SUMMARY OF INVENTION

### TECHNICAL PROBLEM

As mentioned above, it is known that the presence of vanillin makes a great contribution to adding lactic flavor to beverages. Meanwhile, during the process of research and development of beverages with a low degree of sweetness, the present inventors found that when vanillin is incorporated in a beverage with a degree of sweetness of not more than 9, an unpleasant finish caused by vanillin becomes prominently noticeable. Therefore, an object of the present invention is to improve an unpleasant finish caused by vanillin in a beverage comprising vanillin and having a degree of sweetness of not more than 9.

### SOLUTION TO PROBLEM

The present inventors have conducted intensive studies to achieve the aforementioned object, and as a result found that when a specified amount of a galactooligosaccharide is incorporated in a beverage comprising vanillin and having a degree of sweetness of not more than 9, an unpleasant finish caused by vanillin is improved. Based on this finding, the inventors have completed the present invention.

The present invention is directed, but not limited, to the following.
(1) A beverage comprising not less than 5 ppb of vanillin and not less than 1500 ppm of a galactooligosaccharide, the beverage having a degree of sweetness of not more than 9.
(2) The beverage as set forth in (1), further comprising α-terpineol.

### ADVANTAGEOUS EFFECTS OF INVENTION

According to the present invention, an unpleasant finish caused by vanillin can be improved in a beverage comprising vanillin and having a degree of sweetness of not more than 9. By reducing an unpleasant finish in a beverage with a low degree of sweetness, an easy-to-sip beverage can be provided. In other words, by utilizing the technique of this invention, a beverage that has a flavor characteristic of vanillin but is suitable for the style of drinking little by little over time can be provided.

### DESCRIPTION OF EMBODIMENTS

The present invention will be described below. Unless otherwise stated, the terms "ppb", "ppm" and "wt.%" as used herein refer respectively to ppb, ppm, and wt.% on a weight/volume (w/w) basis. All numerical ranges defined herein by lower and upper limits, *i.e.* defined as "from lower limit to upper limit", include their lower and upper limits. For example, the range defined as "from 1 to 2" includes 1 and 2.

One embodiment of the present invention is directed to a beverage. The beverage of this invention is characterized by comprising not less than 5 ppb of vanillin and not less than 1500 ppm of a galactooligosaccharide, and having a degree of sweetness of not more than 9. By employing the structural characteristics as mentioned above, an unpleasant finish caused by vanillin can be improved in a beverage comprising vanillin and having a degree of sweetness of not more than 9. As referred to above, the "unpleasant finish caused by vanillin" means that after a beverage comprising vanillin is drunk, an aroma characteristic of vanillin remains perceived as a sticky sensation in the nose.

### (Vanillin)

The beverage of the present invention comprises vanillin. Vanillin is an organic compound belonging to the class of vanilloids and represented by the chemical formula C₈H₈O₃. Vanillin is also called 4-hydroxy-3-methoxybenzaldehyde, and is assigned CAS Registry No. 121-33-5. Vanillin is known to have a sweet aroma characteristic of vanilla, and is widely used as an ingredient for beverages, foods and perfumes. The origin of vanillin used in the beverage of this invention is not limited. Vanillin may be derived from natural ingredients such as plants or may be a synthetic product. Preferably, vanillin is contained as a flavoring.

The content of vanillin in the beverage of the present invention is not less than 5 ppb. When the content of vanillin in the beverage of this invention is not less than 5 ppb, an aroma characteristic of vanillin is more likely to be perceivable upon drinking the beverage. The content of vanillin in the beverage of this invention is preferably in the range of from 50 to 3000 ppb, more preferably from 100 to 2000 ppb, still more preferably from 150 to 1500 ppb. In this invention, the content of vanillin in a beverage can be measured by the procedure described below.

Five grams of a sample solution is measured out in a glass vial (volume: 20 mL), and Twister (PDMS) produced by Gerstel is added to the vial. Then, aroma components are extracted at room temperature for 30 minutes and subjected to measurement using a gas chromatograph mass spectrometer equipped with a thermal desorption unit. Quantitative values are calculated by the standard addition method. The conditions for gas chromatograph mass spectrometry (GC/MS) are as detailed below.
System:
   GC: GC6890N, produced by Agilent Technologies
   MS: 5975B, produced by Agilent Technologies
Thermal desorption unit: TDU, produced by Gerstel
Column: Inert cap pure WAX, 30 m × 0.25 mm i.d., df = 0.25 µm
Quantifier ion: m/z = 151
Temperature conditions: 40°C (kept for 5 min.), then increasing at a rate of 10°C/min. to 260°C
Carrier gas flow rate: Helium, 1.2 mL/min.
TDU temperature: 260°C
IF temperature: 260°C
Ion source temperature: 230°C

### (Degree of sweetness)

The beverage of the present invention has a degree of sweetness of not more than 9. When the beverage has a degree of sweetness of not more than 9, an unpleasant finish caused by vanillin in the beverage is more likely to be perceivable, so that the effects of this invention can be exhibited markedly. The beverage of this invention has a degree of sweetness of preferably from 1 to 8, more preferably from 3 to 7, still more preferably from 4 to 6.

The "degree of sweetness", as referred to herein, is an index that indicates the sweetness of a beverage as determined based on the sweetness of 100 g of a beverage containing 1 g of sucrose, which is taken as "1". The degree of sweetness of the beverage is determined by converting the content of each sweetness component into a sucrose equivalent based on the relative ratio of the sweetness of each sweetness component to that of sucrose, which is taken as 1, and then by totaling the sucrose sweetness equivalents of all sweetness components (including sweetness components derived from fruit juice, essence, etc.) contained in the beverage. The relative ratios of the sweetness of different representative sweetness components to that of sucrose, which is taken as 1, are listed in the table given below. With regard to other sweetness components not listed in the table below, the degrees of sweetness presented by manufacturers who produce or sell those other sweetness components can be used, or the degrees of sweetness can be determined by sensory testing.

**[Table 1]**

| Sweetness component | Degree of sweetness |
|---|---|
| Sucrose | 1 |
| Glucose | 0.6 |
| Fructose | 1.2 |
| HFCS (with 55% fructose) | 1 |
| Lactose | 0.15 |
| Trehalose | 0.4 |
| D-psicose | 0.7 |
| Maltose | 0.4 |
| Sorbitol | 0.6 |
| Mannitol | 0.6 |
| Maltitol | 0.8 |
| Xylitol | 0.6 |
| Reduced palatinose | 0.45 |
| Erythritol | 0.8 |
| Lactitol | 0.8 |
| Saccharified reduced starch | 0.1 |
| Stevia | 100 |
| Glycyrrhizin | 50 |
| Thaumatin | 2000 |
| Saccharin | 200 |
| Aspartame | 100 |
| Acesulfame potassium | 200 |
| Sucralose | 600 |
| Alitame | 2000 |
| Cyclamate | 30 |
| Dulcin | 200 |
| Neotame | 1000 |
| Neohesperidin | 1000 |
| Monellin | 25000 |
| Lysozyme | 20 |
| Maltooligosaccharide | 0.45 |
| Galactooligosaccharide | 0.35 |

In the present invention, the degree of sweetness of the beverage can be adjusted using a sweetness component(s). For example, the sweetness components listed in the above table can be used, but other sweetness components may also be used. In this invention, such a sweetness component(s) may be directly added as a sweetener(s) to the beverage, or a fruit juice, essence or the like containing such a sweetness component(s) may be added to the beverage. Preferred sweetness components are fructose, high-fructose corn syrup (with 55% fructose), glucose, sucrose, and lactose, with sucrose being a particularly preferred sweetness component. It is better not to use a high-intensity sweetener in the beverage of this invention, since the effect of this invention is easier to perceive. As referred to herein, the high-intensity sweetener refers to an artificial or natural sweetener having a degree of sweetness of 10 or more times as high as sucrose. Examples of high-intensity sweeteners include sucralose, acesulfame potassium, aspartame, and stevia.

### (Galactooligosaccharide)

The beverage of the present invention comprises a galactooligosaccharide. Galactooligosaccharides are a generic name for oligosaccharides other than lactose, which contain galactose as a constituent. In this invention, a galactooligosaccharide is preferably an oligosaccharide produced by allowing lactase to act on lactose, the oligosaccharide in which one or more galactose molecules are attached to galactose residues of lactose by glycosidic linkage. The number of constituent sugars in a galactooligosaccharide is in the range of, for example, from 2 to 10, preferably from 2 to 6, more preferably from 2 to 5. Examples of the galactooligosaccharide of this invention include, but are not limited to, oligosaccharides having the structure represented by Gal-(Gal)n-Glc (n = 1 to 3, β-1,4 linkage or β-1,6 linkage), and disaccharides in which galactose and glucose are attached together by β-1,3 linkage or β-1,6 linkage (transferred disaccharides). In this invention, the galactooligosaccharide may be one of the aforementioned oligosaccharides, or a mixture of two or more of the aforementioned oligosaccharides. An oligosaccharide in which one galactose molecule is attached to the non-reducing end of lactose by β-1,4 linkage is referred to as 4'-galactosyllactose, and an oligosaccharide in which one galactose molecule is attached to the non-reducing end of lactose by β-1,6 linkage is referred to as 6'-galactosyllactose.

The origin of a galactooligosaccharide in the beverage of the present invention is not particularly limited. The galactooligosaccharide may be derived from natural ingredients, or may be a product obtained by enzymatic treatment or a chemically synthesized product. A commercially available galactooligosaccharide product can be preferably used.

The content of a galactooligosaccharide in the beverage of the present invention is not less than 1500 ppm. When the content of a galactooligosaccharide is not less than 1500 ppm, an unpleasant finish caused by vanillin in the beverage can be effectively reduced. The content of a galactooligosaccharide in the beverage of this invention is in the range of preferably from 2500 to 18000 ppm, more preferably from 3500 to 9000 ppm, still more preferably from 4000 to 7000 ppm. When two or more types of oligosaccharides are contained as galactooligosaccharides in the beverage, the galactooligosaccharide content as referred to above is interpreted as referring to a total content of those different types of oligosaccharides. In this invention, the content of a galactooligosaccharide in a beverage can be measured by a known procedure using liquid chromatograph mass spectrometry (LC/MS).

The weight ratio of galactooligosaccharide content to vanillin content in the beverage of the present invention ([galactooligosaccharide content]/[vanillin content]) is not particularly limited, and is, for example, not less than 300, preferably not less than 500, more preferably not less than 1000, still more preferably not less than 1500. Additionally, it should be noted that the aforementioned weight ratio is a ratio calculated using vanillin and galactooligosaccharide contents expressed in the same unit of measurement.

### (a-Terpineol)

The beverage of the present invention may further comprise α-terpineol.By further using α-terpineol, the effects of this invention are more likely to be exhibited more markedly. α-Terpineol is one of monoterpene alcohols, and an organic compound represented by the chemical formula C₁₀H₁₈O. α-Terpineol is also called 1-p-menthen-8-ol or p-menth-1-en-8-ol, and is assigned CAS Registry No. 10482-56-1, 7785-53-7, or 98-55-5. α-Terpineol may be an S- or R-isomer, or a mixture of the two (*e*.*g*., racemate). α-Terpineol is known to be isolated from pine oil, and is generally used as an additive for flavoring, cosmetics, soaps, and the like. The origin of α-terpineol used in the beverage of this invention is not limited. α-Terpineol may be derived from natural ingredients or may be a synthetic product. In this invention, α-terpineol is preferably added as a flavoring.

In the case of using α-terpineol, the content of α-terpineol in the beverage of the present invention is not particularly limited, and is in the range of, for example, from 100 to 5000 ppb. When the content of α-terpineol falls within the aforementioned range, the effects of this invention are more likely to be exhibited more markedly. Even if the content of α-terpineol exceeds 5000 ppb, the effects of this invention are not lost, but the flavor peculiar to α-terpineol becomes excessively intense, so that the taste of the beverage itself may be deteriorated. The content of α-terpineol in the beverage of this invention is in the range of preferably from 300 to 4000 ppb, more preferably from 500 to 3000 ppb. In this invention, the content of α-terpineol in a beverage can be measured by the following procedure described below.

Twenty grams of a sample solution is made up with water to a total volume of 150 mL. To the prepared solution, 4 mL of heptane is added, and the mixture is distilled for 90 minutes in a distillation unit for essential oil quantification. The heptane phase of the sample is subjected to measurement using gas chromatograph mass spectrometry. Quantitative values are calculated by the standard addition method. The conditions for gas chromatograph mass spectrometry (GC/MS) are as detailed below.
System:
   GC: GC7890B, produced by Agilent Technologies
   MS: 5977B, produced by Agilent Technologies
Column: DB-WAX, produced by Agilent Technologies, 30 m × 0.25 mm i.d., df = 0.25 µm
Introduction system: Split ratio = 5:1
Injection volume: 1 µL
Temperature conditions: Sample inlet: 220°C; column: 80°C (kept for 1 min.), then increasing at a rate of 10°C/min. to 240°C
Carrier gas flow rate: Helium 1 mL/min.
Ion source temperature: 230°C
Ionization mode: EI
Quantifier ion: m/z = 136

### (Other ingredients)

The beverage of the present invention not only comprises the different components as mentioned above, but also may have added thereto other additives commonly used in beverages, such as flavoring, enrichment (*e*.*g*., vitamin), antioxidant, emulsifier, preservative, essence, dietary fiber, and/or quality stabilizer, to the extent that such additives do not impair the effects of the present invention. Further, since the beverage of this invention is preferably a lactic-flavored beverage, the beverage of this invention may also contain a lactobacillus strain.

### (pH)

The pH of the beverage of the present invention is not particularly limited, and is, for example, not more than 5, and is preferably in the range of from 2.5 to 4.5, more preferably from 3 to 4. When the beverage has a pH of not more than 5, an unpleasant finish caused by vanillin is more apt to become more clearly perceivable. Therefore, a beverage having a pH of not more than 5 is one of preferred embodiments of this invention, from the viewpoint that the effects of this invention can be exhibited prominently.

The pH of the beverage of the present invention can be adjusted, as appropriate, with the use of an acidulant or a pH adjustor. The type of an acidulant or pH adjustor that can be used in the beverage of this invention is not particularly limited, and examples thereof include: organic acids such as citric acid, malic acid, gluconic acid, succinic acid, ascorbic acid, tartaric acid, lactic acid, and fumaric acid; inorganic acids such as phosphoric acid; and salts thereof; or fruit juices from lemon, grapefruit, orange, *Citrus unshiu,* and the like. Specific examples of acidulants include lactic acid, citric acid, phosphoric acid, malic acid, tartaric acid, gluconic acid, succinic acid, different fruit juices (from citrus fruits, apple, berries, etc.), essences extracted therefrom, or mixtures thereof.

In the present invention, the pH of a beverage can be measured using a known procedure. For example, the pH of a beverage can be measured at 20°C using a pH meter (JIS Z 8805: "Glass electrodes for measurement of pH") in accordance with JIS Z 8802: "Methods for determination of pH of aqueous solutions".

### (Brix)

The Brix value of the beverage of the present invention is not particularly limited, and is, for example, not more than 15°Bx, and is preferably in the range of from 2 to 12°Bx, more preferably from 4 to 10°Bx. When the Brix value of the beverage is not more than 15°Bx, the taste of the beverage itself becomes clean, so that an unpleasant finish caused by vanillin is more apt to become more clearly perceivable. Therefore, a beverage having a Brix value of not more than 15°Bx is one of preferred embodiments of this invention, from the viewpoint that the effects of this invention can be exhibited prominently. The Brix value of the beverage can be measured using a commercially available sugar content meter, refractometer or the like. As referred to herein, the "Brix value" refers to a value obtained by converting a refractive index measured at 20°C into a mass/mass percentage of sucrose in solution based on the conversion table published by ICUMSA (the International Commission for Uniform Methods of Sugar Analysis). The Brix value is expressed in unit of "°Bx", "%" or "degree".

### (Solids-non-fat)

The content of solids-non-fat in the beverage of the present invention is not particularly limited, and is, for example, not more than 2%, preferably not more than 1%, most preferably 0%. When the content of solids-non-fat in the beverage is not more than 2%, an unpleasant finish caused by vanillin is more apt to become more clearly perceivable. Therefore, a beverage containing not more than 2% of solids-non-fat is one of preferred embodiments of this invention, from the viewpoint that the effects of this invention can be exhibited prominently. As referred to herein, the "solids-non-fat" refers to the constituents of milk other than water and butterfat. In this invention, the content of solids-non-fat can be measured by the procedure described in Appended Table 2 "Compositional standards and standards of manufacturing, cooking and storing methods of milk, etc." of the "Ministerial Ordinance on Milk and Milk products Concerning Compositional Standards, etc."

### (Beverage)

The type of the beverage of the present invention is not particularly limited, but the beverage of this invention can be a soft drink. The beverage of this invention may be any of, for example, nutritional beverages, functional beverages, flavored water beverages, tea beverages (*e*.*g*., black tea, oolong tea), coffee beverages, carbonated beverages, and the like, but is preferably a flavored water beverage. In one embodiment, the beverage of this invention is preferably a beverage having a lactic flavor. As referred to herein, the "lactic flavor" refers to a yogurt-like flavor, or a sweet and sour flavor reminiscent of lactobacillus beverages. Lactobacillus beverages refer to beverages made by processing a product obtained by fermenting milk or the like with a lactobacillus strain or yeast, or beverages comprising such a fermented milk product as a primary ingredient. Lactobacillus beverages have an aroma characteristic of a fermented milk. Commercially produced products of lactobacillus beverages include, but are not limited to, Calpis and Yakult. The beverage of this invention is preferably, but not particularly limited to, a beverage with an alcohol content of less than 1% (v/v). When the alcohol content in the beverage is not less than 1% (v/v), alcohol components, such as ethanol, present in the beverage may interfere with the effects of this invention.

The beverage of the present invention is preferably a packaged beverage, which is a beverage packed in a package. The type of the package is not particularly limited, and exemplary packages include plastic bottle (*e*.*g*., PET bottle), aluminum can, steel can, paper package, cup for chilled drink, and glass bottle. *Inter alia,* clear and colorless PET bottles are preferred, because the color of beverages contained in such bottles can be easily discerned, and also because beverages packed in such bottles are easy to handle.

The beverage of the present invention can also be a heat-sterilized packaged beverage. When heat sterilization is performed, the method of heat sterilization is not particularly limited. Heat sterilization can be performed using a common procedure such as UHT sterilization or retort sterilization. The temperature of the heat sterilization process is not particularly limited, and is in the range of, for example, from 65 to 130°C, preferably from 85 to 120°C. The time of the heat sterilization process is not particularly limited, and is in the range of, for example, from 10 to 40 minutes. However, any other sterilization process may also be performed at an appropriate temperature for several seconds, such as 5 to 30 seconds, as long as such a process can achieve a comparable sterilizing value to that process under the aforementioned conditions.

### (Production method)

The beverage of the present invention can be produced by mixing the aforementioned components in appropriate amounts. During the process of production of the beverage of this invention, the order of adding components is not particularly limited. The production method for the beverage of this invention can also comprise the steps of mixing the components and materials described above and adjusting their contents. Various parameters associated with the production of the beverage of this invention, such as the types and contents of the components contained in the beverage, are as described above in relation to the beverage of this invention or are obvious from the descriptions given above.

Further, the production method for the beverage of the present invention comprises a step of heat sterilizing the beverage and may also comprise an optional step of packing the beverage in a package. By going through these steps, the beverage of this invention can be made into a packaged beverage. The conditions for heat sterilization are as described above, but are not particularly limited thereto.

### EXAMPLES

Hereunder, the present invention will be specifically described in detail by way of experimental examples, but this invention is not limited to these examples.

### <Reference Example>

Three different types of beverage samples having different degrees of sweetness and containing 1000 ppb of vanillin were prepared. To be specific, the different beverage samples were prepared by the following procedure: 1000 ppb of vanillin was added to water, and then sucrose was added to the mixture so as to give different degrees of sweetness as shown in the table given below. Further, the beverage samples were adjusted with citric acid to a pH of 3.5.

The prepared beverage samples were subjected to sensory evaluation by three professional panelists. In the sensory evaluation, the beverage samples were evaluated for an unpleasant finish caused by vanillin perceived after drinking, on a 3-point scale according to the following evaluation criteria. The sensory ratings were first given by each panelist on his/her own, and then finally determined through discussion among all the panelists.

### (Evaluation criteria)

3: No unpleasant finish caused by vanillin is perceived.
2: An unpleasant finish caused by vanillin is somewhat perceived.
1: An unpleasant finish caused by vanillin is significantly perceived.

**[Table 2]**

| Sample | A | B | c |
|---|---|---|---|
| Degree of sweetness | 4 | 9 | 12 |
| Sensory rating | 1 | 1 | 3 |

The results are as shown above. An unpleasant finish caused by vanillin was perceived in the two beverage samples with a degree of sweetness of not more than 9, whereas no unpleasant finish caused by vanillin was perceived in the other sample with a degree of sweetness of 12.

### <Experimental Example 1>

Different beverage samples were prepared by adding vanillin, a galactooligosaccharide, a maltooligosaccharide, and α-terpineol to water so as to ensure that the different components were contained at different final concentrations as shown in the table given below. The degree of sweetness of the different beverage samples was adjusted with sucrose. The pH of the beverage samples was adjusted to 3.5 with citric acid. With regard to the added components, the galactooligosaccharide used was "Oligomate 55N" (produced by Yakult Pharmaceutical Industry Co., Ltd.) (galactooligosaccharide content: 55%; degree of sweetness: 0.32), and the maltooligosaccharide used was "Fujioligo #360" (produced by Nihon Shokuhin Kako Co., Ltd.) (maltotriose content: 60%; maltotetraose content: 7.6%; degree of sweetness: 0.33).

The prepared beverage samples were subjected to sensory evaluation by five professional panelists. In the sensory evaluation, the beverage samples were evaluated for an unpleasant finish caused by vanillin perceived after drinking, with beverage samples (a) to (e) as shown in the table below being used as references of rating scores of 5 to 1. The rating scores shown in the table are average ratings taken from the ratings given by the five professional panelists.

**[Table 3-1]**

| | Reference sample | | | | |
|---|---|---|---|---|---|
| | a | b | c | d | e |
| Vanillin [ppb] | 0 | 1 | 5 | 1000 | 5000 |
| Galactooligosaccharide [ppm] | 0 | 0 | 0 | 0 | 0 |
| Maltooligosaccharide [ppm] | 0 | 0 | 0 | 0 | 0 |
| *α* -terpineol [ppb] | 0 | 0 | 0 | 0 | 0 |
| Galactooligosaccharide/vanillin | 0 | 0 | 0 | 0 | 0 |
| Degree of sweetness | 6 | 6 | 6 | 6 | 6 |
| Sensory rating | 5 | 4 | 3 | 2 | 1 |

**[Table 3-2]**

| | Sample | | | | | | | | | |
|---|---|---|---|---|---|---|---|---|---|---|
| | 1-1 | 1-2 | 1-3 | 1-4 | 1-5 | 1-6 | 1-7 | 1-8 | 1-9 | 1-10 |
| Vanillin [ppb] | 5 | 500 | 1000 | 1000 | 1000 | 5000 | 1000 | 1000 | 1000 | 1000 |
| Galactooligosaccharide [ppm] | 1500 | 1500 | 500 | 1500 | 5000 | 1500 | 1500 | 1500 | 1500 | 0 |
| Maltooligosaccharide [ppm] | 0 | 0 | 0 | 0 | 0 | 0 | 0 | 0 | 0 | 1500 |
| α-terpineol [ppb] | 0 | 0 | 0 | 0 | 0 | 0 | 500 | 2000 | 0 | 0 |
| Galactooligosaccharide/vanillin | 300000 | 3000 | 500 | 1500 | 5000 | 300 | 1500 | 1500 | 1500 | 0 |
| Degree of sweetness | 6 | 6 | 6 | 6 | 6 | 6 | 6 | 6 | 3 | 6 |
| Sensory rating | 4.8 | 4.0 | 3.2 | 4.3 | 4.8 | 4.3 | 5.0 | 4.8 | 4.5 | 2.0 |

The results of the sensory evaluation are as shown in the table given above. It was found that when not less than 1500 ppm of a galactooligosaccharide was added to beverages comprising not less than 5 ppb of vanillin and having a degree of sweetness of not more than 9, an unpleasant finish caused by vanillin was improved. In contrast, when a maltooligosaccharide was instead added to beverages, no improvement was observed in terms of an unpleasant finish caused by vanillin. When α-terpineol was further added to beverages, further improvement was observed in terms of an unpleasant finish caused by vanillin.

## Claims

1. A beverage comprising not less than 5 ppb of vanillin and not less than 1500 ppm of a galactooligosaccharide, the beverage having a degree of sweetness of not more than 9.

2. The beverage according to claim 1, further comprising α-terpineol.
